(19) Europäisches Patentamt / European Patent Office / Office européen des brevets

(11) **EP 1 375 449 B1**

(12) **EUROPEAN PATENT SPECIFICATION**

(45) Date of publication and mention
of the grant of the patent:
**29.10.2008 Bulletin 2008/44**

(51) Int Cl.:
*C04B 35/632* (2006.01)    *C04B 35/195* (2006.01)
*B28B 3/20* (2006.01)    *B28B 3/26* (2006.01)
*C04B 24/04* (2006.01)

(21) Application number: **02708680.0**

(22) Date of filing: **27.03.2002**

(86) International application number:
**PCT/JP2002/002971**

(87) International publication number:
**WO 2002/079116 (10.10.2002 Gazette 2002/41)**

(54) **METHOD FOR MANUFACTURING HONEYCOMB STRUCTURE**

VERFAHREN ZUR HERSTELLUNG WABENFÖRMIGER STRUKTUREN

PROCEDE DE FABRICATION DE STRUCTURES EN NID D'ABEILLES

(84) Designated Contracting States:
**BE DE**

(30) Priority: **29.03.2001 JP 2001097702**

(43) Date of publication of application:
**02.01.2004 Bulletin 2004/01**

(73) Proprietors:
• **NGK INSULATORS, LTD.**
**Nagoya-shi, Aichi 467-8530 (JP)**
• **KAO CORPORATION**
**Chuo-ku**
**Tokyo 103-8210 (JP)**

(72) Inventors:
• **MAKINO, Kyoko,**
**NGK INSULATORS, LTD.**
**Nagoya-shi, Aichi 467-8530 (JP)**

• **ISHIBASHI, Yoichi,**
**KAO CORPORATION, Research Lab.**
**Wakayama-shi, Wakayama 640-8580 (JP)**

(74) Representative: **Paget, Hugh Charles Edward et al**
**Mewburn Ellis LLP**
**York House**
**23 Kingsway**
**London WC2B 6HP (GB)**

(56) References cited:
**EP-A1- 0 652 191**    **EP-A1- 0 680 938**
**EP-A1- 0 824 144**    **JP-A- 2 081 606**
**JP-A- 2001 179 720**

• **KIRK-OTHMER: "Encyclopedia of Chemical Technology, 3rd Ed." 1980, JOHN WILEY & SONS , USA 9 , XP002442842 * page 804 ***

EP 1 375 449 B1

**EP 1 375 449 B1**

**Description**

Technical Field

The present invention relates to a process for producing a honeycomb structure. More particularly, the present invention relates to a process for producing a honeycomb structure, which comprises subjecting, to extrusion, a ceramic raw material mixture obtained by adding at least a dispersing agent and water to a particulate ceramic raw material.

Background Art

In recent years, production of honeycomb structure has been conducted by a process using a continuous extruder.
This process using a continuous extruder conducts successively:

a step of feeding, into a continuous extruder, a ceramic raw material mixture obtained by adding, to a particulate ceramic raw material, a dispersing medium such as water or the like and an additive such as binder or the like, and transferring and kneading the raw material mixture using a twin screw or the like, to obtain a puddle, and
a step of extruding the puddle,

and can promise a very high productivity.
In such a production process, however, the ceramic raw material mixture having a relatively high viscosity receives a large amount of a mechanical energy from the equipment during kneading and consequently a large amount of heat is generated in the raw material mixture; as a result, the binder in the ceramic raw material mixture causes gelling during kneading and the ceramic raw material mixture hardens, and it is pointed out that inferior shaping arises owing to nonuniform kneading and, in some cases, the equipment has to be stopped forcibly.
Meanwhile, in JP-B-6-35126 was proposed a production process using a twin screw type continuous extruder, wherein a gel type binder having a predetermined viscosity is used and, by allowing the binder to have a high gelling temperature, the curing of a ceramic raw material mixture is prevented.
In this process, however, the pressure generated in the ceramic raw material mixture is not reduced at all; therefore, the load acting on the extruder is large and there have been problems, for example, the wear, damage, etc. of kneading blade and die and an increase in power consumption.
Further in this process, the ceramic raw material mixture is kneaded with its high viscosity being maintained; therefore, the individual components in the ceramic raw material mixture cannot be uniformized completely when the kneading is conducted in a short time as in a continuous extruder, and the process still has had a problem of inferior shaping caused by nonuniform kneading.
In contrast, in JP-A-7-138076 was proposed a process in which a ceramic raw material mixture containing a processing aid containing an emulsified wax or the wax and a fatty acid ester or a fatty acid soap is kneaded and extruded and thereby the puddle obtained by kneading is allowed to have improved fluidity and the pressure acting on the raw material mixture is reduced while the extrudate obtained retains its shape.
In this process, however, the reduction in the pressure acting on the raw material mixture, caused by the use of the processing aid was not sufficient; therefore, it was necessary to use water or a dispersing agent in a relatively large amount in order to increase the fluidity of the puddle during extrusion and obtain an extrudate free from, for example, the damage of its external shape or the deformation of the cell (rib) of its honeycomb structure. As a result, there occurred, for example, the deformation of the honeycomb structure owing to its own weight and the extrudate had no sufficient shape retainability; thus, the honeycomb structure obtained finally had no sufficient shape.
In this case, it is considered to reduce the addition amount of the water or the dispersing agent in order to enhance the shape retainability of the extrudate. However, the reduction of the water or the dispersing agent gives a puddle of insufficient fluidity; therefore, there occur, for example, the damage of the external shape of the extrudate and the deformation of the cell (rib) of the honeycomb structure, the honeycomb structure obtained finally has an inferior shape, and the extruder receives an increased load.
Further in the above process, the uniformization of the individual components of the ceramic raw material mixture was impossible by kneading of short time; therefore, in using a continuous extruder where kneading and extrusion are conducted successively and the kneading time is set to be short, there was a problem of inferior shaping due to nonuniform kneading.
The present invention has been made in view of the above-mentioned problems and aims at providing a process for producing a honeycomb structure, which can produce a honeycomb structure of superior shape at a high productivity and wherein the load acting on the extruder can be reduced.

Disclosure of the Invention

The present inventors made a study and found out that the above aim could be achieved by using a dispersing agent containing salts of fatty acids each of particular carbon atoms, at particular proportions. The finding has led to the completion of the present invention.

According to the present invention, there is provided a process for producing a honeycomb structure, which comprises adding, to a particulate ceramic raw material, at least water and a fatty acid salt-containing dispersing agent, kneading a resultant mixture to obtain a puddle, and extruding the puddle, characterized in that the fatty acid salt constituting the dispersing agent comprises:

> a fatty acid salt having a fatty acid moiety of 12 carbon atoms, of an amount of 45 to 75% by mass (in terms of the value of the fatty acid moiety),
> a fatty acid salt having a fatty acid moiety of 14 carbon atoms, in an amount of 10 to 30% by mass (in terms of the value of the fatty acid moiety),
> a fatty acid salt having a fatty acid moiety of 16 carbon atoms, in an amount of 5 to 15% by mass (in terms of the value of the fatty acid moiety), and
> a fatty acid salt having a fatty acid moiety of other carbon atoms, in a residual amount.

In the present invention, the fatty acid salt constituting the dispersing agent, preferably comprises:

> a fatty acid salt having a fatty acid moiety of 12 carbon atoms, in an amount of 48 to 65% by mass (in terms of the value of the fatty acid moiety),
> a fatty acid salt having a fatty acid moiety of 14 carbon atoms, in an amount of 10 to 30% by mass (in terms of the value of the fatty acid moiety),
> a fatty acid salt having a fatty acid moiety of 16 carbon atoms, in an amount of 7 to 12% by mass (in terms of the value of the fatty acid moiety), and
> a fatty acid salt having a fatty acid moiety of other carbon atoms, in a residual amount.

The fatty acid salt constituting the dispersing agent has a neutralization degree of preferably 58% to less than 99%, more preferably 77% to less than 90%.

In the present invention, such a dispersing agent is added in an amount of preferably 0.1 to 2 parts by weight (in terms of the value of the solid content) relative to 100 parts by weight of the particulate ceramic raw material.

Also in the present invention, it is possible to further add, to the particulate ceramic raw material, a binder composed mainly of a water-soluble cellulose derivative. Further, the particulate ceramic raw material is preferably composed mainly of raw material capable of forming cordierite.

Also in the present invention, it is preferred to successively conduct:

> a step of feeding, into a continuous extruder, a ceramic raw material mixture obtained by adding, to a particulate ceramic raw material, at least water and a dispersing agent, and kneading the ceramic raw material mixture to obtain a puddle, and
> a step of extruding the puddle.

Brief Description of the Drawing

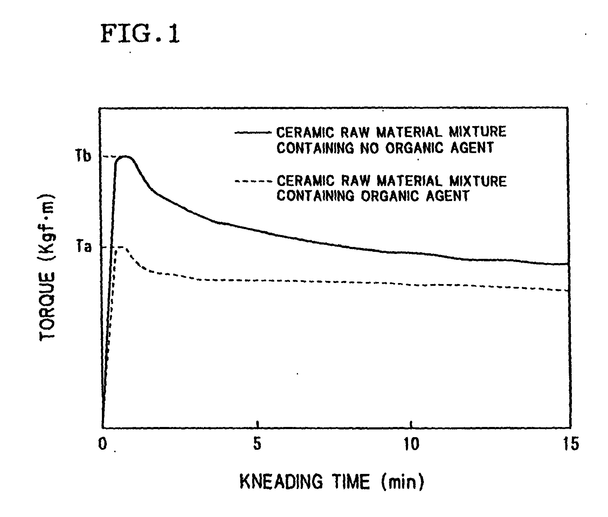

> Fig. 1 is a graph showing the results of the tests each conducted for determining a peak torque reduction represented by the general formula (1), which is a means for evaluating the effect of the present invention.

Best Mode for Carrying Out the Invention

The mode for carrying out the present invention is specifically described below.

The process for production of honeycomb structure according to the present invention comprises adding, to a particulate ceramic raw material, a dispersing agent containing fatty acid salts having fatty acid moieties of 12, 14 and 16 carbon atoms, in particular proportions and at least water, kneading a resultant mixture to obtain a puddle, and extruding the puddle.

There is no particular restriction as to the particulate ceramic raw material used in the present invention. However, there can be mentioned, for example, a ceramic raw material containing one or more kinds selected from silicon, titanium, zirconium, silicon carbide, boron carbide, titanium carbide, zirconium carbide, silicon nitride, boron nitride, aluminum nitride, aluminum oxide, zirconium oxide, mullite, raw material capable of forming cordierite, aluminum titanate, sialon, kaolin, talc, aluminum hydroxide, fused silica and quartz.

The particulate ceramic raw material may also be a mixture of the above ceramic and, for example, a metal such as copper, aluminum, iron, nickel or the like.

The dispersing agent used in the present invention is such a material that the fatty acid salt constituting the dispersing agent comprises:

a fatty acid salt having a fatty acid moiety of 12 carbon atoms, in an amount of 45 to 75% by mass (in terms of the value of the fatty acid moiety),
a fatty acid salt having a fatty acid moiety of 14 carbon atoms, in an amount of 10 to 30% by mass (in terms of the value of the fatty acid moiety),
a fatty acid salt having a fatty acid moiety of 16 carbon atoms, in an amount of 5 to 15% by mass (in terms of the value of the fatty acid moiety), and
a fatty acid salt having a fatty acid moiety of other carbon atoms, in a residual amount.

The fatty acid salt preferably comprises:

a fatty acid salt having a fatty acid moiety of 12 carbon atoms, in an amount of 48 to 65% by mass (in terms of the value of the fatty acid moiety),
a fatty acid salt having a fatty acid moiety of 14 carbon atoms, in an amount of 10 to 30% by mass (in terms of the value of the fatty acid moiety),
a fatty acid salt having a fatty acid moiety of 16 carbon atoms, in an amount of 7 to 12% by mass (in terms of the value of the fatty acid moiety), and
a fatty acid salt having a fatty acid moiety of other carbon atoms, in a residual amount.

With a dispersing agent composed mainly of a fatty acid salt outside the above ranges, the pressure acting on the ceramic raw material mixture and the heat generated in the ceramic raw material mixture during extrusion of puddle are not reduced effectively, and the quick uniformization of the individual components in the ceramic raw material mixture is difficult; therefore, in short-time kneading, the resulting honeycomb structure tends to be inferior in shape and the extruder receives a large load.

The fatty acid salt, which is a main component of the dispersing agent, may be any of a saturated fatty acid salt and an unsaturated fatty acid salt, also may be any of a straight-chain fatty acid salt and a branched chain fatty acid salt.

As the fatty acid salt having a fatty acid moiety of 12 carbon atoms, there can be mentioned, for example, those each having a fatty acid moiety corresponding to lauric acid, dodecenoic acid, isolauric acid, linderic acid or the like. As the fatty acid salt having a fatty acid moiety of 14 carbon atoms, there can be mentioned, for example, those each having a fatty acid moiety corresponding to myristic acid, tetradecenoic acid, isomyristic acid, phydeseteric acid (*sic*) or the like. As the fatty acid salt having a fatty acid moiety of 16 carbon atoms, there can be mentioned, for example, those each having a fatty acid moiety corresponding to palmitic acid, hexadecenoic acid, isopalmitic acid, palmitoleic acid, hiragoic acid or the like.

As the fatty acid salt other than mentioned above, there can be mentioned, for example, those each having a fatty acid moiety corresponding to butyric acid, caproic acid, caprylic acid, capric acid, stearic acid, arachic acid, behenic acid, lignoceric acid, montanic acid, oleic acid, elaidic acid, linolic acid, linoleic acid, erucic acid, licinoleic acid or the like.

As the "base moiety" constituting the fatty acid salt, there can be mentioned, for example, alkali metals such as sodium, potassium and the like; alkaline earth metals such as calcium, magnesium and the like; and ammonia. Of these, sodium and potassium are preferred because they can more effectively reduce the pressure acting on the ceramic raw material mixture and the heat generated in the ceramic raw material mixture and can more quickly uniformize the individual components in the ceramic raw material mixture during its kneading. Incidentally, the fatty acid salt dissociates in the dispersing medium, and both the fatty acid moiety and the base moiety are present therein as respective ions.

In the present invention, the fatty acid salt, which is a main component of the dispersing agent, has a neutralization degree of preferably 58% to less than 99%, more preferably 77% to less than 90%.

When the neutralization degree is less than 58%, the dispersing agent does not act on the particulate ceramic raw material or the binder and causes self-agglomeration; therefore, there may decrease (1) the effect of reducing the pressure which the ceramic raw material mixture receives during extrusion of puddle and the heat generated in the ceramic raw material mixture, (2) the effect of reducing the load which the extruder receives, and (3) the effect of promoting quick uniformization. Meanwhile, when the neutralization degree is 100% or more, the proportion of free metal ion is high and the metal ion acts so as to separate the dispersing agent from the particulate ceramic raw material and the binder; as a result, the above-mentioned effects may decrease as well.

In the present specification, the neutralization degree refers to a ratio of the equivalent of counter ion present in dispersing agent when the equivalent of fatty acid in dispersing agent is taken as 100%.

Next, description is made on the method for preparing the dispersing agent used in the present invention.

First, an aqueous solution of a hydroxide containing a required salt moiety, such as sodium hydroxide, potassium hydroxide or the like is prepared in a predetermined concentration. Then, with stirring, the aqueous solution is kept at a temperature higher than the melting points (measured according to JIS K 0065) of fatty acids corresponding to the fatty acid moieties (of 12, 14, 16 and other carbon atoms) of the fatty acid salts to be contained in the dispersing agent to be prepared.

Then, to the aqueous hydroxide solution are added fatty acids (of 12, 14, 16 and other carbon atoms) in proportions corresponding to those of the fatty acid moieties of the fatty acid salts to be contained in the dispersing agent to be prepared. The mixture is stirred to prepare a dispersing agent. In this case, the neutrality of the fatty acid salts is set so that the ratio of the equivalent of the base component in the aqueous hydroxide solution and the equivalent of the total fatty acids corresponds to predetermined neutrality in terms of the value of solid content.

The dispersing agent used in the present invention can as necessary contain, for example, a wetting agent such as ethylene glycol, dipropylene glycol, glycerine or the like; and a nonionic surfactant such as alkylene oxide adduct of higher alcohol, sorbitan ester, alkylene oxide adduct of sorbitan ester, polyalcohol ester, alkylene oxide adduct of polyalcohol, alkylene oxide adduct of polyalcohol ester and the like. These components other than fatty acid salts are contained in the dispersing agent in an amount of preferably 0 to 80% by mass, more preferably 0 to 50% by mass.

In the present invention, the dispersing agent is added in an amount of preferably 0.1 to 2 parts by weight (in terms of the value of the solid content), more preferably 0.1 to 1.0 part by weight (in terms of the value of the solid content) relative to 100 parts by weight of the particulate ceramic raw material.

When the addition amount of the dispersing agent is within the above range, it is possible to achieve the quick uniformization of the ceramic raw material mixture, the reduction in the pressure acting on the ceramic raw material mixture, and the reduction in the heat generated in the ceramic raw material mixture, in extrusion of puddle; as a result, a honeycomb structure of high extrudability can be obtained in short-time kneading without excess load acting on the extruder.

The water used as a dispersing medium in the present invention is added in an amount of preferably 25 to 35 parts by weight, more preferably 28 to 32 parts by weight relative to 100 parts by weight of the particulate ceramic raw material.

In the present invention, there can be used, besides, additives such as a binder, an agent for crystal growth, an agent for forming micropores and the like as necessary.

As the binder, there can be mentioned, for example, water-soluble cellulose derivatives such as hydroxypropyl methyl cellulose, hydroxypropyl ethyl cellulose, hydroxyethyl methyl cellulose, methyl cellulose, hydroxyethyl cellulose, carboxymethyl cellulose and the like; and polyvinyl alcohol.

As the agent for crystal growth, there can be mentioned, for example, magnesia, silica, yttria and iron oxide. As an agent for forming micropores, there can be mentioned, for example, graphite, wheat flour, starch, phenolic resin and polyethylene terephthalate.

In the present invention, kneading and extrusion can be conducted, for example, by conducting kneading using a vacuum pug mill to obtain a cylindrical puddle and then extruding the puddle by a ram extruder to obtain a honeycomb structure extrudate.

In the present invention, as mentioned previously, the pressure acting on the ceramic raw material mixture and the heat generated in the ceramic raw material mixture during extrusion of puddle are reduced greatly and, moreover, the individual components in the ceramic raw material mixture can be uniformized quickly in the kneading. Therefore, in the present invention, it is preferred to use a continuous extruder of twin screw type or the like, having high requirements for these properties, and successively conduct:

a step of feeding, into the extruder, a ceramic raw material mixture comprising a particulate ceramic raw material, a dispersing agent, water and an additive added as necessary and kneading the ceramic raw material mixture in the extruder to obtain a puddle, and

a step of extruding the puddle. Thereby, a honeycomb structure can be produced at a very high productivity.

In the present invention, there is no particular restriction as to the step conducted after extrusion. Drying and firing may be conducted under the conditions ordinarily employed.

The present invention is described specifically below by way of Examples. However, the present invention is in no way restricted by these Examples.

1. Methods of evaluation

In each Example or each Comparative Example, reduction in peak torque and shaping of honeycomb structural extrudate were determined by the following methods, and the reduction in pressure generated in ceramic raw material mixture and the shaping of honeycomb structure were evaluated.

(Reduction in peak torque)

In each Example or each Comparative Example, a torque meter was fitted to the blade of a Banbury type kneader; a raw material batch was kneaded using the kneader; and the torque applied to the blade of the kneader during the kneading was measured with the passage of a time. In each Example or each Comparative Example, this measurement of the torque applied to the blade of the kneader during the kneading of raw material batch was made on a case containing a dispersing agent and a case containing no dispersing agent.

As shown in Fig. 1, in each of the case containing a dispersing agent and the case containing no dispersing agent, the torque increases rapidly immediately after the start of kneading of raw material batch, reaches a peak in a short time, thereafter decreases slowly and, after a certain period, becomes substantially constant.

Meanwhile, when a dispersing agent is added, as compared when no dispersing agent is added, the torque is low overall, and the reduction in torque is most striking at the peak torque.

Hence, reduction ($\triangle T$) in peak torque was calculated from the peak torque when a dispersing agent was added and the peak torque when no dispersing agent was added, using the general formula (1) shown below. With this reduction in peak torque, the reduction in pressure acting on raw material mixture was evaluated.

$$\triangle T = (Tb - Ta)/Tb \times 100 \qquad (1)$$

[In the general formula (1), Ta is a peak torque during kneading when a ceramic raw material mixture containing a dispersing agent has been used, and Tb is a peak torque during kneading when a ceramic raw material mixture containing no dispersing agent has been used.]

(Shaping)

A honeycomb structural extrudate obtained in each Example or each Comparative Example was visually observed for external shape to evaluate the shaping of the honeycomb structure. The evaluation was made based on the following standard.

○: There was no deformation in the cells (ribs) of honeycomb structure.
∆: There was minor deformation in the cells (ribs) of honeycomb structure.
X: There was major deformation in the cells (ribs) of honeycomb structure.

2. Examples and Comparatives

(Example 1)

First, 100 parts by weight of particulate raw materials capable of forming cordierite, consisting of 39% by mass of talc, 15% by mass of kaolin, 15% by mass of calcinated kaolin, 8% by mass of alumina, 17% by mass of aluminum hydroxide and 6% by mass of silica, were mixed with 5 parts by weight of hydroxypropyl methyl cellulose (a binder), 27 parts by weight of water (a dispersing medium) and 0.6 part by weight (in terms of solid content) of a sodium salt of mixed fatty acids (a dispersing agent) having a neutralization degree of 100%, to prepare a ceramic raw material mixture.

In this case, the sodium salt of mixed fatty acids having a neutralization degree of 100%, used as a dispersing agent was composed of 53.3% by mass of a fatty acid salt having a fatty acid moiety of lauric acid (carbon atoms: 12), 15.5% by mass of a fatty acid salt having a fatty acid moiety of myristic acid (carbon atoms: 14), 10.3% by mass of a fatty acid salt having a fatty acid moiety of palmitic acid (carbon atoms: 16) and 20.9% by mass of a fatty acid salt having a fatty acid moiety of carbon atoms other than 12, 14 and 16 (each % by mass is in terms of the value of each fatty acid moiety). This dispersing agent was prepared as follows. An aqueous solution containing 48% by mass of sodium hydroxide was kept, with stirring, at 70°C which was higher than the melting points (measured by JIS K 0065) of lauric acid, myristic acid and palmitic acid. Then, to 16.8 parts by weight (in terms of solid content) of this aqueous sodium hydroxide solution was added 100 parts by weight of a mixed fatty acid composed of 53.3% by mass of lauric acid, 15.5% by weight of myristic acid, 10.5% by mass of palmitic acid and 20.9% by mass of fatty acids having 8 to 22 (12, 14 and 16 are excluded) carbon atoms. Thereafter, stirring was conducted.

Next, the ceramic raw material mixture prepared above was fed into a continuous extruder of twin screw type, and the kneading of the raw material mixture and the extrusion of the resulting puddle were conducted successively to obtain an extrudate of honeycomb structure.

(Examples 2 to 14 and Comparative Examples 1 to 10)

Extrudates of honeycomb structure were produced in the same manner as in Example 1 except that each fatty acid salt composed as shown in Table 1 was used as a dispersing agent. Each composition of the fatty acids used is shown in Table 1.

(Table 1)

| | | Patty acid salt contained in dispersing agent | | | | | Neutralization degree (%) | Reduction in peak torque (%) | shaping |
| | | Fatty acid moiety (mass %) | | | | Salt moiety | | | |
| | | 12 carbon atoms | 14 carbon atoms | 16 carbon atoms | Others | | | | |
|---|---|---|---|---|---|---|---|---|---|
| Examples | 1 | 53.3 | 15.5 | 10.3 | 20.9 | Sodium | 100 | 38 | ○ |
| | 2 | 62.6 | 25.8 | 11.6 | 0 | Potassium | 100 | 43 | ○ |
| | 3 | 49.2 | 18.4 | 8.7 | 23.7 | Calcium | 100 | 30 | Δ |
| | 4 | 74.3 | 14.0 | 6.9 | 4.8 | Magnesium | 100 | 27 | Δ |
| | 5 | 45.4 | 19.1 | 12.2 | 23.3 | Ammonium | 100 | 23 | Δ |
| | 6 | 58.9 | 10.1 | 7.4 | 23.6 | Sodium | 100 | 41 | ○ |
| | 7 | 58.0 | 29.8 | 9.5 | 2.7 | Potassium | 100 | 35 | ○ |
| | 8 | 61.7 | 20.2 | 5.1 | 13.0 | Calcium | 100 | 25 | Δ |
| | 9 | 59.5 | 24.7 | 14.8 | 1.0 | Magnesium | 100 | 29 | Δ |
| | 10 | 45.1 | 10.3 | 5.2 | 39.4 | Ammonium | 100 | 26 | Δ |
| | 11 | 55.5 | 29.6 | 14.9 | 0 | Potassium | 100 | 36 | ○ |
| | 12 | 58.6 | 29.8 | 9.5 | 2.7 | Potassium | 62 | 56 | ○ |
| | 13 | 58.0 | 29.8 | 9.5 | 2.7 | Potassium | 94 | 58 | ○ |
| | 14 | 58.0 | 29.8 | 9.5 | 2.7 | Potassium | 85 | 60 | ○ |

(continued)

| | | Patty acid salt contained in dispersing agent | | | | | Neutralization degree (%) | Reduction in peak torque (%) | shaping |
|---|---|---|---|---|---|---|---|---|---|
| | | Fatty acid moiety (mass %) | | | | Salt moiety | | | |
| | | 12 carbon atoms | 14 carbon atoms | 16 carbon atoms | Others | | | | |
| Comparative Examples | 1 | 99.8 | 0.1 | 0.1 | 0 | Potassium | 100 | 15 | Δ |
| | 2 | 38.2 | 15.6 | 10.3 | 35.9 | Sodium | 100 | 14 | Δ |
| | 3 | 63.7 | 5.5 | 8.8 | 22.0 | Calcium | 100 | 6 | X |
| | 4 | 48.1 | 41.2 | 9.4 | 1.3 | Magnesium | 100 | 11 | Δ |
| | 5 | 59.6 | 20.3 | 3.2 | 16.9 | Ammonium | 100 | 6 | X |
| | 6 | 61.7 | 17.8 | 20.5 | 0 | Sodium | 100 | 14 | Δ |
| | 7 | 60.0 | 0 | 0 | 40 | Potassium | 100 | 13 | X |
| | 8 | 20.0 | 0 | 20.0 | 60 | Potassium | 100 | 14 | Δ |
| | 9 | - | - | - | Hexanoic acid | Calcium | 100 | 0 | X |
| | 10 | - | - | - | Oleic acid | Magnesium | 100 | 10 | X |

3. Results of evaluation

As shown in Table 1, in Examples 1 to 14, in each of which the composition of the fatty acid salt used as a dispersing agent was in the ranges specified by the present invention, the reduction in peak torque was 23% or more, the reduction in the pressure acting on the raw material mixture was large, and the shaping was almost good although some of the extrudates had slight deformation.

In Examples 12 to 14, in each of which the neutralization degree was controlled at 58% to less than 99%, the reduction in peak torque was 56 to 60%, the reduction in the pressure acting on the raw material mixture was very large, the extrudate showed no deformation, and the extrudability was very good.

In contrast, in Comparative Examples 1 to 10, in each of which the composition of the fatty acid salt used as a dispersing agent was outside the ranges specified by the present invention, the reduction in peak torque was 0 to 15%, the reduction in the pressure acting on the raw material mixture was small, the extrudate had deformation, and the degree of deformation was high in many cases.

Industrial Applicability

As described above, the present invention allows production of a honeycomb structure of superior shape at a high productivity and can provide a process for producing a honeycomb structure, wherein the load applied to the extruder is small. In the present invention, in particular, the pressure acting on the raw material mixture and the heat generated in the raw material mixture are reduced greatly and the individual components in the raw material mixture can be uniformized quickly; therefore, there can be provided a process for producing a honeycomb structure, which is particularly suitable in using a continuous extruder.

**Claims**

1.   A process for producing a honeycomb structure, which comprises adding, to a particulate ceramic raw material, at least water and a fatty acid salt-containing dispersing agent, kneading a resultant mixture to obtain a puddle, and extruding the puddle, **characterized in that** the fatty acid salt constituting the dispersing agent comprises:

   a fatty acid salt having a fatty acid moiety of 12 carbon atoms, in an amount of 45 to 75% by mass (in terms of the value of the fatty acid moiety),
   a fatty acid salt having a fatty acid moiety of 14 carbon atoms, in an amount of 10 to 30% by mass (in terms of the value of the fatty acid moiety),
   a fatty acid salt having a fatty acid moiety of 16 carbon atoms, in an amount of 5 to 15% by mass (in terms of the value of the fatty acid moiety), and
   a fatty acid salt having a fatty acid moiety of other carbon atoms, in a residual amount.

2.   A process for producing a honeycomb structure according to Claim 1, wherein the fatty acid salt which is a main component of the dispersing agent, has a neutralization degree of 58% to less than 99%.

3.   A process for producing a honeycomb structure according to Claim 1 or 2, wherein the dispersing agent is added in an amount of 0.1 to 2 parts by weight (in terms of the value of the solid content) relative to 100 parts by weight of the particulate ceramic raw material.

4.   A process for producing a honeycomb structure according to any of Claims 1 to 3, wherein to the particulate ceramic raw material is further added a binder composed mainly of a water-soluble cellulose derivative.

5.   A process for producing a honeycomb structure according to any of Claims 1 to 4, wherein the particulate ceramic raw material is composed mainly of raw material capable of forming cordierite.

6.   A process for producing a honeycomb structure according to any of Claims 1 to 5, which conducts successively:

   a step of feeding, into a continuous extruder, a ceramic raw material mixture obtained by adding, to the particulate ceramic raw material, at least water and the dispersing agent, and kneading the ceramic raw material mixture to obtain a puddle, and
   a step of extruding the puddle.

**Patentansprüche**

1. Verfahren zur Herstellung einer Wabenstruktur, umfassend die Zugabe von zumindest Wasser und einem fettsäuresalzhältigen Dispergierungsmittel zu einem teilchenförmigen Keramik-Rohmaterial, das Kneten des resultierenden Gemischs zur Erhaltung einer Masse und das Extrudieren der Masse, **dadurch gekennzeichnet, dass** das Fettsäuresalz, welches das Dispergierungsmittel bildet, Folgendes umfasst:

   ein Fettsäuresalz mit einer Fettsäuregruppierung von 12 Kohlenstoffatomen in einer Menge von 45 bis 75 Masse-% (in Bezug auf den Wert der Fettsäuregruppierung),
   ein Fettsäuresalz mit einer Fettsäuregruppierung von 14 Kohlenstoffatomen in einer Menge von 10 bis 30 Masse-% (in Bezug auf den Wert der Fettsäuregruppierung),
   ein Fettsäuresalz mit einer Fettsäuregruppierung von 16 Kohlenstoffatomen in einer Menge von 5 bis 15 Masse-% (in Bezug auf den Wert der Fettsäuregruppierung) und
   ein Fettsäuresalz mit einer Fettsäuregruppierung mit anderer Kohlenstoffatomanzahl in einer Restmenge.

2. Verfahren zur Herstellung einer Wabenstruktur nach Anspruch 1, worin das Fettsäuresalz, welches ein Hauptbestandteil des Dispergierungsmittels ist, einen Neutralisationsgrad von 58 % bis weniger als 99 % aufweist.

3. Verfahren zur Herstellung einer Wabenstruktur nach Anspruch 1 oder 2, worin das Dispergierungsmittel, bezogen auf 100 Gewichtsteile des teilchenförmigen Keramik-Rohmaterials, in einer Menge von 0,1 bis 2 Gewichtsteilen (in Bezug auf den Wert des Feststoffgehalts) zugesetzt wird.

4. Verfahren zur Herstellung einer Wabenstruktur nach einem der Ansprüche 1 bis 3, worin zu dem teilchenförmigen Keramik-Rohmaterial ferner ein Bindemittel zugesetzt wird, das hauptsächlich aus einem wasserlöslichen Cellulose-Derivat besteht.

5. Verfahren zur Herstellung einer Wabenstruktur nach einem der Ansprüche 1 bis 4, worin das teilchenförmige Keramik-Rohmaterial hauptsächlich aus einem Rohmaterial besteht, das in der Lage ist, Cordierit zu bilden.

6. Verfahren zur Herstellung einer Wabenstruktur nach einem der Ansprüche 1 bis 5, das der Reihe nach Folgendes umfasst:

   einen Schritt der Zugabe eines Keramik-Rohmaterialgemischs, das erhalten wird, indem zu dem teilchenförmigen Keramik-Rohmaterial zumindest Wasser und das Dispergierungsmittel zugesetzt werden, in einen kontinuierlichen Extruder und des Knetens des Keramik-Rohmaterialgemischs, um eine Masse zu erhalten, und
   einen Schritt zum Extrudieren der Masse.

**Revendications**

1. Procédé de production d'une structure en nid d'abeilles, qui comprend l'ajout, à une matière première céramique particulaire, au moins d'eau et d'un agent dispersant contenant un sel d'acide gras, le malaxage d'un mélange résultant pour obtenir un bain de mélange, et l'extrusion du bain de mélange, **caractérisé en ce que** le sel d'acide gras constituant l'agent dispersant comprend :

   un sel d'acide gras ayant une fraction acide gras de 12 atomes de carbone, à raison de 45 à 75 % en masse (en fonction de la valeur de la fraction acide gras),
   un sel d'acide gras ayant une fraction acide gras de 14 atomes de carbone, à raison de 10 à 30 % en masse (en fonction de la fraction acide gras),
   un sel d'acide gras ayant une fraction acide gras de 16 atomes de carbone, à raison de 5 à 15 % en masse (en fonction de la fraction acide gras), et
   un sel d'acide gras ayant une fraction acide d'autres atomes de carbone, en une quantité résiduelle.

2. Procédé de production d'une structure en nid d'abeilles selon la revendication 1, dans lequel le sel d'acide gras qui est un composant principal de l'agent dispersant a un degré de neutralisation de 58 % à moins de 99 %.

3. Procédé de production d'une structure en nid d'abeilles selon la revendication 1 o 2, dans lequel l'agent dispersant est ajouté à hauteur de 0,1 à 2 parties en poids (en fonction de la valeur de la teneur en solides) pour 100 parties en poids de la matière première céramique particulaire.

4. Procédé de production d'une structure en nid d'abeilles selon l'une quelconque des revendications 1 à 3, dans lequel un liant composé principalement d'un dérivé de cellulose soluble dans l'eau est par ailleurs ajouté à la matière première céramique particulaire.

5. Procédé de production d'une structure en nid d'abeilles selon l'une quelconque des revendications 1 à 4, dans lequel la matière première céramique particulaire est composée principalement d'une matière première capable de former de la cordiérite.

6. Procédé de production d'une structure en nid d'abeilles selon l'une quelconque des revendications 1 à 5, qui réalise successivement :

une étape de fourniture, dans une extrudeuse continue, d'un mélange de matières premières céramiques obtenu en ajoutant, à la matière première céramique particulaire, au moins de l'eau et l'agent dispersant, et en malaxant le mélange de matières premières céramiques pour obtenir un bain de mélange, et
une étape d'extrusion du bain de mélange.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6035126 B

- JP 7138076 A